# EUROPÄISCHE PATENTSCHRIFT

(11) **EP 2 633 995 B1**
(45) Veröffentlichungstag und Bekanntmachung des Hinweises auf die Patenterteilung: **27.05.2015**
(21) Anmeldenummer: 13002801.2
(22) Anmeldetag: 15.03.2010
(51) Int. Cl.: B32B 27/06, B32B 27/08, B32B 27/32, B32B 27/36, B65D 65/40, B65D 81/00

(54) **Mehrschichtfilm**
Multi-layer film
Film multicouche

(30) Priorität: 02.04.2009 CH 5442009
(43) Veröffentlichungstag der Anmeldung: 04.09.2013
(62) Teilanmeldung aus: 10405052.1
(73) Patentinhaber: Amcor Flexibles Kreuzlingen Ltd., 8280 Kreuzlingen (CH)
(72) Erfinder: Yildirim, Selcuk, 8820 Wädenswil (CH); Jammet, Jean-Claude, 80090 Amiens (FR); Lohwasser, Wolfgang, 78262 Gailingen (DE)
(74) Vertreter: Gernet, Samuel Andreas

(56) Entgegenhaltungen:
- EP-A1- 2 145 756
- WO-A1-2007/059903

## Beschreibung

Die Erfindung betrifft einen Mehrschichtfilm nach dem Oberbegriff des Anspruch 1.

Bei aus dem Stand der Technik bekannten Verpackungen mit modifizierter Gasatmosphäre wird in der Regel eine Verpackung mit dem Verpackungsgut bestückt und anschliessend mittels einer Gasspülung mit einem Inertgas, z.B. mit Stickstoff, gespült und anschliessend verschlossen. Das Ziel hierbei ist es, den verbleibenden Gasraum in der Verpackung möglichst sauerstofffrei zu halten. Es zeigt sich hier jedoch bei dem aus dem Stand der Technik bekannten Verfahren, dass mit dieser Methode der Restsauerstoffgehalt im Kopfraum der Verpackung nicht unterhalb von 0,5 bis 2 Vol-% reduziert werden kann. Bei sauerstoffempfindlichen Verpackungsgütern, insbesondere Lebensmitteln, führt bereits dieser geringe Restsauerstoffgehalt über die Lagerzeit zu qualitativen Beeinträchtigungen des Verpackungsgutes.

Eine Variante zur Lösung dieses Problems sieht vor, dass Sauerstoff-Adsorbermaterialien in eine Verpackungsfolie eingearbeitet oder aber in Form von zusätzlichen diese Sauerstoff-Adsorbermaterialien enthaltenden Beuteln in Verpackungen eingelegt werden. Aber auch diese Technik bringt Nachteile mit sich. So sind derartige Systeme oft nicht transparent, z.B. bei Verwendung von Eisenoxid in Kunststoff, oder reagieren relativ langsam, wodurch bei empfindlichen Verpackungsgütern die Oxidation des Verpackungsgutes schneller als die des Sauerstoff-Adsorbers abläuft.

WO 2007/059903 A1 offenbart ein Dünnschicht-Verbundsystem, das mindestens einen Substratfilm und mindestens eine Dünnschicht mit einem Katalysator für die Reduktion von Sauerstoff aufweist. Der Katalysator katalysiert dabei die Reduktion von Sauerstoff, wodurch bei oxidationsempfindlichen Verpackungsgütern störender Sauerstoff verbraucht wird. Daher wird das Verbundsystem auch in Form von Beutelfolien, Abdeckfolien oder partiell applizierten Einzelfolien für sauerstoffempfindliche Verpackungsgüter verwendet. Die auf den Substratfilm aufgedampfte Dünnschicht mit dem Katalysator ist üblicherweise von einem Polymerfilm, der über einen Kaschierkleber mit dem Substratfilm verbunden ist, abgedeckt. Sowohl die Klebstoffschicht als auch den als Abdeckung eingesetzten Polymerfilm sind jedoch mit dem Nachteil behaftet, dass dadurch die Sauerstoff-Reduktionsgeschwindigkeit wesentlich herabgesetzt wird.

Der Erfindung liegt die Aufgabe zugrunde, einen Mehrschichtfilm der eingangs genannten Art bereitzustellen, welcher den bei Filmen nach dem Stand der Technik auftretenden Nachteilen einer verminderten Sauerstoff-Reduktionsgeschwindigkeit entgegenwirkt und gleichzeitig einfach und kostengünstig herstellbar ist.

Zur erfindungsgemässen Lösung der Aufgabe führt ein Mehrschichtfilm mit den Merkmalen des Anspruchs 1.

Die Sauerstoff-Reduktionsgeschwindigkeit, auch Oxygen Scavenging Rate (OSR [ml O₂/m²·h]), kann durch folgende Massnahmen, die zur Erhöhung der Diffusionsgeschwindigkeit beitragen, weiter erhöht werden:
- Der Polymerfilm kann mindestens in einem Teilbereich Perforationen, insbesondere Mikroperforationen, aufweisen.
- Der Polymerfilm kann eine hohe Sauerstoff-Durchtrittsgeschwindigkeit (Oxygen Transfer Rate, OXTR) aufweisen.
- Die Klebstoffschicht kann mindestens in einem Teilbereich als Muster von Klebstoffschichtelementen in der Form von Streifen oder Punkten angeordnet sein.

Auch die Dünnschicht mit dem Katalysator kann, z. B. aus Kostengründen, mindestens in einem Teilbereich partiell, insbesondere als Muster von Dünnschichtelementen, z. B. in der Form von Streifen oder Punkten, angeordnet sein.

Der Mehrschichtfilm kann als Verpackungsfolie, Beutelfolie oder partiell applizierte Einzelfolie verwendet werden. Bevorzugte Einsatzgebiete sind der Pharmabereich mit Blistern und Medikamentenverpackungen aller Art, sowie technische Anwendungen, z.B. Verwendung des mit der Dünnschicht beschichteten Substratfilm als Katalysator.

Die Abscheidung der Dünnschicht mit dem Katalysator kann bei Verpackungen bzw. Verpackungsteilen auf die Bereiche ausserhalb der Siegelzonen begrenzt sein.

Der erfindungsgemässe Mehrschichtfilm kann auch in der Form eines im Bereich der Verpackung mit Füllgutkontakt auf das Verpackungsmaterial aufgeklebten oder gegen das Verpackungsmaterial gesiegelten Labels eingesetzt werden. Derartige Label können bereits bei der Produktion des Verpackungsmaterials oder erst auf der Abpackmaschine an entsprechenden Stellen mit späterem Füllgutkontakt angebracht werden.

Da bei der katalytischen Reaktion von Sauerstoff mit Wasserstoff Wasser entsteht, kann bei feuchteempfindlichen Produkten neben der Sauerstoffreduktion in bekannter Weise eine Feuchte adsorbierende Substanz eingesetzt werden.

Unter Dünnschicht werden sämtliche Schichtsysteme verstanden, die durch Vakuumbeschichtungsverfahren (CVD und PVD) im Nanomassstab herstellbar sind.

Mit Hilfe des Katalysators wird eine Reduktion des Sauerstoffs herbeigeführt, wobei der im Kopfraum einer Verpackung enthaltene Sauerstoff durch Zusatz geringer Mengen eines reduzierenden Gases, z. B. Wasserstoff, katalytisch als Knallgasreaktion H₂ + ½ O₂ → H₂0 umgesetzt wird.

Bei dem hier beschriebenen System handelt es sich somit um ein sogenanntes O2-Scavenger-System. Durch die katalytische Umsetzung wird der in der Atmosphäre vorhandene Sauerstoff entfernt.

Als Katalysatoren für die Reduktion von Sauerstoff sind grundsätzlich alle aus dem Stand der Technik bekannten Katalysatoren einsetzbar. Vorzugsweise ist der Katalysator ein Edelmetall, z.B. Palladium oder Platin. Eine andere bevorzugte Variante sieht vor, dass der Katalysator ein Metalloxid oder ein metallisches Mischoxid ist, insbesondere Co₃O₄ oder das Mischoxid Mn-CuO-Ag₂O.

Der Katalysator wird vorzugsweise als möglichst dünne Schicht, besonders bevorzugt als monoatomare Lage aufgebracht. Dies soll zum einen die optische Transparenz im Wellenbereich des Spektrums des sichtbaren Lichts sicherstellen, zum anderen die Herstellungskosten möglichst gering halten.

Die Dünnschicht wird im Vakuum auf den Substratfilm aufgedampft. Die Dünnschichttechnologie ermöglicht dabei einen wirtschaftlichen Einsatz des ansonsten sehr teuren Katalysatormaterials.

Die Dünnschicht weist eine Schichtdicke von 0,01 bis 50 nm auf. Der abzubauende Sauerstoff kann dabei ebenso wie der Wasserstoff durch das Verbundsystem bis zur Katalysatorschicht diffundieren und wird dort katalytisch zu Wasser umgesetzt.

Der Substratfilm kann ebenfalls aus einem Verbundfilm bestehen. Eine bevorzugte Variante sieht vor, dass der Substratfilm eine Sperrschicht für Sauerstoff aufweist, die die Sauerstoffpermeation durch den Mehrschichtfilm verhindert. Als Sperrschichten können alle für diesen Zweck bekannten Materialien, wie Metallfolien, Dünnschichten aus SiOₓ, Al₂O₃ und andere Metalloxide, sowie organischen Verbindungen eingesetzt werden. Besonders bevorzugt besteht die hier beschriebene Sperrschicht aus SiOₓ mit x = 1.0 bis 2.0, AlOy mit y = 1.3 bis 1.6, Ethylenvinylalkoholcopolymeren und/oder Vinylidenchloridcopolymeren. Besonders bevorzugt ist ein Substratfilm, bei dem zunächst eine Sperrschicht aus SiOₓ und nachfolgend direkt auf die SiOₓ - Sperrschicht die Dünnschicht mit dem Sauerstoff reduzierenden Katalysator abgeschieden wird. Überraschend hat sich gezeigt, dass durch diese Kombination die Oxygen Scavenger Rate (OSR) gegenüber einem nur mit dem Katalysator beschichteten Substratfilm aus PET signifikant höher liegt.

Bevorzugte Substratfilme sind mit SiOₓ beschichtete Filme, insbesondere mit SiOₓ beschichtete PET-Filme, da diese die höchsten OSR-Werte aufweisen. Bevorzugte Beschichtungen weisen eine Beschichtungsdicke von 0.05 bis 5 nm, insbesondere 0.05 bis 0.5 nm auf. Als Katalysator wird bevorzugt Palladium eingesetzt.

Bevorzugt wird das Palladium mittels Sputtern von einem Palladiumtarget aufgebracht. Besonders bevorzugt ist das Aufbringen des Palladiums in Linie mit einer SiOx-Barrierebeschichtung mittels einer oder mehrerer nach der Oxyd-Barrierebedampfung angeordneter Sputterquellen.

Um Palladium zu sparen, können auch kleine Sputterkathoden mit z. B. 25 mm Durchmesser in der Breite einer Folienbahn entsprechend dem Abstand, wie sie später für eine Verpackung eingesetzt wird, nebeneinander angeordnet sein. Damit werden ca. 30 mm breite Palladium-Streifen auf die Folienbahn aufgebracht, wodurch der Verbrauch an Palladium gegenüber vollflächig beschichteten Filmen stark reduziert ist.

Weiter können die Sputterquellen auch gepulst werden, so dass an Stelle von Streifen nur noch Palladium-Flecken auf der Folienbahn abgeschieden werden. Durch geschickte Steuerung der Pulse in Registrierung mit der Packungslänge kann z. B. immer genau ein Palldium-Fleck pro Packung abgeschieden werden.

Hinsichtlich des Substratfilms bestehen ansonsten keine wesentlichen Beschränkungen. So können hier vorzugsweise alle aus dem Verpackungsbereich bekannten Kunststoffe verwendet werden. Bevorzugt besteht der Substratfilm aus Polyethylenterephthalat (PET), Polyolefinen, insbesondere Polypropylen (PP) und Polyethylen (PE), Polyamiden (PA), Polystyrolen (PS), Polycarbonaten sowie deren Copolymeren und/oder Polymerblends.

Der Vliesstoff des Polymerfilms kann bevorzugt ausgewählt sein aus der Gruppe der Polyethylenterephthalate, Polyolefine, insbesondere Polypropylen und Polyethylen, Polyamide, Polystyrole, Polycarbonate, lonomere, sowie deren Copolymeren und/oder Polymerblends. Hierbei sind besonders Ethylen(meth)acrylsäure-Copolymere zu nennen. Besonders bevorzugt besteht der Vliesstoff des Polymerfilms aus Polyethylen.

Eine weitere bevorzugte Variante sieht vor, dass das erfindungsgemässe Verbundsystem im Wellenbereich des Spektrums des sichtbaren Lichts transparente Eigenschaften aufweist. Dies bedeutet, dass für einen Betrachter das Verbundsystem keinerlei Verfärbungen oder Trübungen zeigt.

Eine weitere Variante sieht vor, dass das erfindungsgemässe Verbundsystem zusätzlich einen Emitter für ein reduzierendes Gas, insbesondere einen H₂-Emittter, enthält. Hierzu sind grundsätzlich alle Verbindungen und Systeme geeignet, die zur Freisetzung von Wasserstoff in der Lage sind. Beispielsweise zählen hierzu ein System aus einer Säure und einem unedlen Metall, d.h. einem Metall mit niedrigem Normalpotential, z.B. Zink und Salzsäure. Ein weiteres Beispiel für einen H₂-Emitter ist ein System aus Metallhydriden und Wasser, bei dem es durch reaktive Umsetzung zur Bildung von Metallhydroxid und Wasserstoff kommt. Ein weiteres Beispiel ist die Umsetzung von Eisenchlorid und Wasser, bei dem ebenfalls Wasserstoff freigesetzt werden kann.

Zum sauerstofffreien Verpacken von oxidationsempfindlichen Verpackungsgütern wird das Verpackungsgut zunächst in eine aus dem Mehrschichtfilm hergestellte Verpackung, z. B. ein Beutel, eingelegt. Verpackungsgut und Verbundsystem werden dann mit einem Inertgas, insbesondere Stickstoff, gespült. Optional ist es auch möglich, dass der Kopfraum der Verpackung zunächst evakuiert wird. Wesentlich ist es nun, dass dem Inertgas geringe Mengen an Wasserstoff zugesetzt werden, durch die die katalytische Umsetzung des Sauerstoffs ermöglicht wird. Nach dem Spülen des Systems erfolgt dann der gasdichte Verschluss der Verpackung. In Verbindung mit der Katalysatorschicht erfolgt dann im Kopfraum der Verpackung eine nahezu sofortige Umsetzung des Wasserstoffs mit dem verbliebenen Restwasserstoff zu Wasser. Dies ermöglicht eine Verpackung mit einer verminderten Sauerstoffkonzentration.

Vorzugsweise werden dem Inertgas 0,5 bis 20 Vol.-% Wasserstoff zugesetzt.

Der erfindungsgemässe Mehrschichtfilm wird vorzugsweise als Verpackungsfolie, Beutelfolie oder als partiell applizierte Einzelfolie eingesetzt. Der beschriebene Mehrschichtfilm eignet sich dabei hervorragend als Verpackungsfolie für beliebige Verpackungsgüter, insbesondere Lebensmittel. Ebenso kann der erfindungsgemässe Mehrschichtfilm auch als Einzelfolie in einem Produkt selbst verwendet werden, z.B. als Folie in einem elektrischen Gerät, um dessen Funktion zu gewährleisten, wenn einzelne Komponenten des Geräts extrem feuchteempfindlich sind. Die Anwendungsfälle betreffen dabei die Lebensmittelindustrie, pharmazeutische Produkte und Geräte, die Elektronikindustrie, die chemische Industrie aber auch kulturelle und militärische Bereiche.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: den Schichtaufbau eines Mehrschichtfilms nach dem Stand der Technik;
- Fig. 2: den Schichtaufbau einer ersten Ausführungsform eines erfindungsgemässen Mehrschichtfilms;
- Fig. 3: den Schichtaufbau eines nicht erfindungsgemässen Mehrschichtfilms;
- Fig. 4: den Schichtaufbau eines nicht erfindungsgemässen Mehrschichtfilms;
- Fig. 5: den Schichtaufbau einer zweiten Ausführungsform eines erfindungsgemässen Mehrschichtfilms.

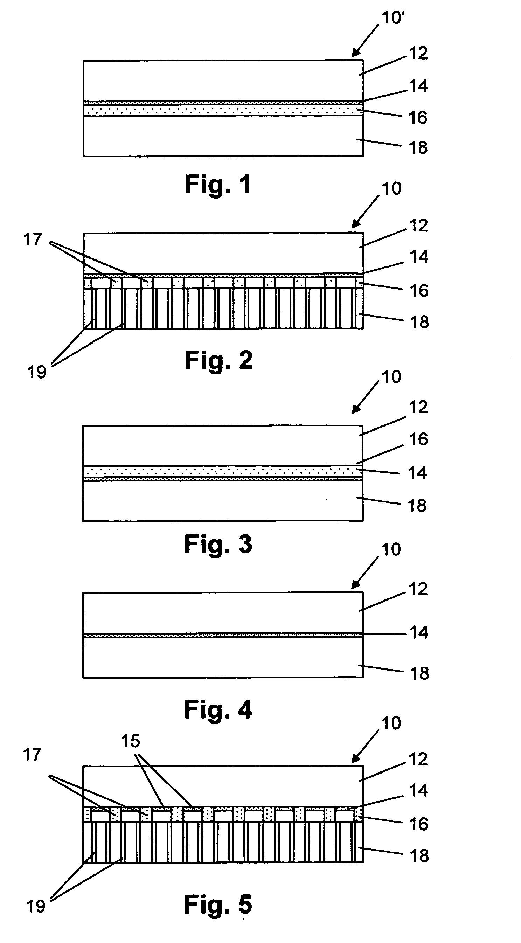

Ein in Fig. 1 dargestellter Mehrschichtfilm 10' nach dem Stand der Technik weist z. B. einen 12 µm dicken PET-Film als Substratfilm 12 auf, der auf einer Seite mit einer aus dem Vakuum abgeschiedenen, z. B. 0,5 nm (Nanometer) dicken Dünnschicht 14 aus beispielsweise Palladium beschichtet ist. Eine z. B. als Siegelschicht dienende Polymerschicht 18 aus einem Polyethylenfilm einer Dicke von z. B. 25 µm ist über eine Klebstoffschicht 16 mit dem mit der Dünnschicht 14 belegten Substratfilm 12 zu dem Mehrschichtfilm 10' verbunden.

Eine in Fig. 2 gezeigte erste Ausführungsform eines erfindungsgemässen Mehrschichtfilms 10 weist z. B. einen 12 µm dicken PET-Film als Substratfilm 12 auf, der auf einer Seite mit einer aus dem Vakuum abgeschiedenen, z. B. 0,5 nm (Nanometer) dicken Dünnschicht 14 aus beispielsweise Palladium beschichtet ist. Eine z. B. als Siegelschicht dienende Polymerschicht 18 aus einem Polyethylenfilm einer Dicke von z. B. 25 µm ist über eine Klebstoffschicht 16 mit dem mit der Dünnschicht 14 belegten Substratfilm 12 zu dem Mehrschichtfilm 10 verbunden. Der Unterschied zu dem Mehrschichtfilm 10' nach dem Stand der Technik gemäss Fig. 1 liegt darin, dass die Klebstoffschicht 16 als Muster in Form von Streifen oder Punkten 17 aufgetragen ist, und der Polymerfilm 18 Mikroperforationen 19 aufweist.

Eine in Fig. 3 gezeigte Ausführungsform eines nicht erfindungsgemässen Mehrschichtfilms 10 weist z. B. einen 12 µm dicken PET-Film als Substratfilm 12, eine aus dem Vakuum abgeschiedene, z. B. 0,5 nm (Nanometer) dicke Dünnschicht 14 aus beispielsweise Palladium, eine Polymerschicht 18 aus einem Polyethylenfilm einer Dicke von z. B. 25 µm und eine Klebstoffschicht 16 auf. Der Unterschied zu dem Mehrschichtfilm 10' nach dem Stand der Technik gemäss Fig. 1 liegt darin, dass die Dünnschicht 14 aus Palladium auf dem Polymerfilm 18 abgeschieden ist und die Klebstoffschicht 16 zwischen der Dünnschicht 14 und dem Substratsfilm 12 angeordnet ist.

Eine in Fig. 4 gezeigte Ausführungsform eines nicht erfindungsgemässen Mehrschichtfilms 10 weist z. B. einen 12 µm dicken PET-Film als Substratfilm 12 auf, der auf einer Seite mit einer aus dem Vakuum abgeschiedenen, z. B. 0,5 nm (Nanometer) dicken Dünnschicht 14 aus beispielsweise Palladium beschichtet ist. Der Unterschied zu dem Mehrschichtfilm 10' nach dem Stand der Technik gemäss Fig. 1 liegt darin, dass die Polymerschicht 18 ohne Verwendung einer Klebstoffschicht als Extrusionsschicht direkt auf dem mit der Dünnschicht 14 belegten Substratfilm 12 aufgetragen ist.

Eine in Fig. 5 gezeigte zweite Ausführungsform eines erfindungsgemässen Mehrschichtfilms 10 entspricht der in Fig. 2 gezeigten ersten Ausführungsform, wobei hier die Dünnschicht 14 aus beispielsweise Palladium als Muster in Form von Streifen oder Punkten 15 zwischen der ebenfalls als Muster in Form von Streifen oder Punkten 17 aufgetragenen Klebstoffschicht 16 angeordnet ist.

### Beispiel 1 (nicht erfindungsgemäss)

PET-Filme wurden mit Palladium beschichtet. Die Schichtdicke von Pd auf der Oberfläche der PET-Filme lag zwischen 5 und 100 nm. An den mit Pd beschichteten PET-Filmen wurde die Oxygen Scavenging Rate (OSR) gemessen. Die Versuche wurden an Filmen gleicher Filmdicke und bei gleichem Ausgangsvolumen an Sauerstoff durchgeführt. Die Ergebnisse dieser Untersuchungen sind in Tabelle 1 zusammengestellt.

**Tabelle 1: Einfluss einer Pd Beschichtung auf die Oxygen Scavenging Rate (OSR)**

| Palladium- Beschichtung auf PET-Film | | | | |
|---|---|---|---|---|
| Pd-Schichtdicke [nm] | 5 | 10 | 20 | 100 |
| Oxygen Scavenging Rate [cm³/m²·h] | 200 | 18 | 14 | 17 |

Bei Pd-Schichtdicken < 5 nm ergeben sich ähnlich grosse OSR-Werte wie bei Filmen mit einer Beschichtung mit 5 nm Pd. Daraus ergibt sich zur Erzielung hoher OSR-Werte ein optimaler Schichtdickenbereich von 0,05 bis 5 nm, mit einem bevorzugten Bereich von 0,05 bis 0,5 nm. Mit von 0,5 nm abnehmender Schichtdicke nimmt auch der OSR-Wert ab. Die optimale Schichtdicke sollte deshalb im Bereich von 0,05 bis 0,5 nm entsprechend dem geforderten OSR-Wert gewählt werden. Filme mit derart dünnen Pd-Schichten zeigen keine Verfärbungen und sind im Vergleich zu Filmen mit grösseren Pd-Schichtdicken kostengünstiger. Sehr geringe Beschichtungsdicken führen eher zu atomaren Clustern als zu einer gleichmässigen, vollflächigen Beschichtung. Schichtdicken vom weniger als 0,5 nm entsprechen deshalb rechnerisch ermittelten Dicken.

### Beispiel 2 (nicht erfindungsgemäss)

Aus unterschiedlichen Materialien aufgebaute Filme wurden mit 5 nm Pd beschichtet und anschliessend einer OSR- Prüfung unterworfen. Die Versuche wurden an Filmen gleicher Filmdicke und bei gleichem Ausgangsvolumen an Sauerstoff durchgeführt. Die Ergebnisse sind in Tabelle 2 zusammengestellt.

**Tabelle 2: Einfluss des Filmmaterials eines mit 5 nm Pd beschichteten Films**

| Unterschiedliche Filme beschichtet mit 5 nm Pd | | | |
|---|---|---|---|
| Filmmaterial | PE | PET | PET/SiOₓ |
| Zeit [h] bis zum vollständigen Verbrauch des Sauerstoffs | 6 | 1.5 | 0.15 |

Aus Tabelle 2 ist deutlich ersichtlich, dass ein mit SiOₓ beschichteter PET-Film im Vergleich zu den anderen Filmen, wie PE oder PET, nach einer Beschichtung mit 5 nm Pd einen stark erhöhten OSR-Wert aufweist. Mit SiOₓ beschichtete Filme sind deshalb bevorzugte Substrate für die Pd-Beschichtung.

## Patentansprüche

1. Mehrschichtfilm enthaltend mindestens einen Substratfilm (12), mindestens eine im Vakuum auf einer ersten Seite des Substratfilms (12) in einer Dicke von 0,01 bis 50 nm aufgedampfte, mindestens einen Katalysator für die Reduktion von Sauerstoff enthaltende Dünnschicht (14), und mindestens eine auf der ersten Seite des Substratfilms (12) über der Dünnschicht (14) angeordnete Polymerschicht (18), wobei die Polymerschicht ein Polymerfilm (18) ist und über einer Klebstoffschicht (16) angeordnet ist, die Klebstoffschicht und der Polymerfilm (18) über der Dünnschicht (14) angeordnet sind, und zur Erhöhung der Sauerstoff-Reduktionsgeschwindigkeit die Klebstoffschicht (16) in der Form eines Musters nur einen Teil der Oberfläche der Dünnschicht (14) belegt,
**dadurch gekennzeichnet, dass**
der Polymerfilm (18) aus einem Vliesstoff ist.

2. Mehrschichtfilm nach Anspruch 1, **dadurch gekennzeichnet, dass** der Polymerfilm (18) mindestens in einem Teilbereich Perforationen (19), insbesondere Mikroperforationen, aufweist.

3. Mehrschichtfilm nach Anspruch 1, **dadurch gekennzeichnet, dass** die Klebstoffschicht (16) mindestens in einem Teilbereich als Muster von Klebstoffschichtelementen (17) in Form von Streifen oder Punkten angeordnet ist.

4. Mehrschichtfilm nach Anspruch 1, **dadurch gekennzeichnet, dass** die Dünnschicht (14) mit dem Katalysator mindestens in einem Teilbereich als Muster von Dünnschichtelementen (15) in Form von Streifen oder Punkten angeordnet ist.

5. Mehrschichtfilm nach Anspruch 1, **dadurch gekennzeichnet, dass** der Substratfilm (12) ein mit SiOₓ beschichteter Film, insbesondere ein mit SiOₓ beschichteter PET-Film ist.

6. Mehrschichtfilm nach Anspruch 1, **dadurch gekennzeichnet, dass** als Katalysator Palladium in einer Schichtdicke von 0.05 bis 5 nm, insbesondere 0.05 bis 0.5 nm, eingesetzt wird.

7. Verfahren zur Herstellung eines Mehrschichtfilms nach einem der Ansprüche 1 bis 6, **dadurch gekennzeichnet, dass** der Katalysator mittels Sputtern auf den Substratfilm (12) aufgebracht wird.

8. Verfahren nach Anspruch 7, **dadurch gekennzeichnet, dass** der Katalysator in Linie mit einer SiOₓ -Beschichtung mittels einer oder mehrerer nach der SiOₓ -Beschichtung angeordneter Sputterquellen aufgebracht wird.

9. Verfahren nach Anspruch 7 oder 8, **dadurch gekennzeichnet, dass** mehrere Sputterkathoden der Breite einer Folienbahn entsprechend dem Abstand, wie sie später für eine Verpackung eingesetzt wird, nebeneinander angeordnet sind.

10. Verfahren nach Anspruch 9, **dadurch gekennzeichnet, dass** die Sputterkathoden gepulst werden, so dass an Stelle von Streifen Palladium-Flecken auf der Folienbahn abgeschieden werden.

11. Verwendung der Mehrschichtfolie nach einem der Ansprüche 1 bis 6 als Verpackungsfolie, Beutelfolie oder partiell applizierte Einzelfolie, insbesondere in Form eines im Bereich der Verpackung mit Füllgutkontakt auf das Verpackungsmaterial aufgeklebten oder gegen das Verpackungsmaterial gesiegelten Labels.

## Claims

1. Multilayer film containing at least one substrate film (12), at least one thin layer (14) which is vapour-deposited, under vacuum, on a first side of the substrate film (12) with a thickness of from 0.01 to 50 nm and contains at least one catalyst intended for oxygen reduction, and at least one polymer layer (18) arranged over the thin layer (14) on the first side of the substrate film (12), the polymer layer being a polymer film (18) and being arranged over an adhesive layer (16), the adhesive layer and the polymer film (18) being arranged over the thin layer (14) and the adhesive layer (16) covering only some of the surface of the thin layer (14) in the form of a pattern in order to increase the rate at which oxygen is reduced,
**characterised in that**
the polymer film (18) consists of a non-woven fabric.

2. Multilayer film according to claim 1, **characterised in that** at least a portion of the polymer film (18) comprises perforations (19), in particular microperforations.

3. Multilayer film according to claim 1, **characterised in that** at least a portion of the adhesive layer (16) is arranged so as to form a pattern of adhesive layer elements (17) in the form of stripes or dots.

4. Multilayer film according to claim 1, **characterised in that** at least a portion of the thin layer (14) comprising the catalyst is arranged so as to form a pattern of thin layer elements (15) in the form of stripes or dots.

5. Multilayer film according to claim 1, **characterised in that** the substrate film (12) is a film coated with SiOₓ, in particular a PET film coated with SiOₓ.

6. Multilayer film according to claim 1, **characterised in that** palladium having a layer thickness of from 0.05 to 5nm, in particular of from 0.05 to 0.5 nm, is used as the catalyst.

7. Method for producing a multilayer film according to any of claims 1 to 6, **characterised in that** the catalyst is applied to the substrate film (12) by means of sputtering.

8. Method according to claim 7, **characterised in that** the catalyst is applied in line with an SiOₓ coating by means of one or more sputtering sources arranged downstream of the SiOₓ coating.

9. Method according to either claim 7 or claim 8, **characterised in that** a plurality of sputtering cathodes having the width of a foil web are arranged side by side according to the distance at which said foil web will later be used for packaging.

10. Method according to claim 9, **characterised in that** the sputtering cathodes are pulsed so that, instead of stripes, palladium spots are deposited on the foil web.

11. Use of the multilayer foil according to any of claims 1 to 6 as a packaging foil, bag foil or an individual foil applied in part, in particular in the form of a label which is either bonded to the packaging material in the region of the packaging which contacts the filling material or sealed to the packaging material.

## Revendications

1. Film multicouche contenant au moins un film de substrat (12), au moins une mince couche (14) contenant au moins un catalyseur pour la réduction d'oxygène, déposée par évaporation sous vide sur un premier côté du film de substrat (12) dans une épaisseur de 0,01 à 50 nm, et au moins une couche polymère (18) disposée sur le premier côté du film de substrat (12) sur la mince couche (14), la couche polymère étant un film polymère (18) et étant disposée sur une couche d'adhésif (16), la couche d'adhésif et le film polymère (18) étant disposés sur la mince couche (14), et afin d'élever la vitesse de réduction de l'oxygène, la couche d'adhésif (16) recouvre dans la forme d'un modèle uniquement une partie de la surface de la mince couche (14),
**caractérisé en ce que**
le film polymère (18) est un non-tissé.

2. Film multicouche selon la revendication 1, **caractérisé en ce que** le film polymère (18) présente au moins dans un domaine partiel des perforations (19), en particulier des micro-perforations.

3. Film multicouche selon la revendication 1, **caractérisé en ce que** la couche d'adhésif (16) est disposée au moins dans un domaine partiel comme modèle d'éléments de couche d'adhésif (17) dans la forme de bandes ou de points.

4. Film multicouche selon la revendication 1, **caractérisé en ce que** la mince couche (14) est disposée avec le catalyseur au moins dans un domaine partiel comme modèle d'éléments de couche mince (15) dans la forme de bandes ou de points.

5. Film multicouche selon la revendication 1, **caractérisé en ce que** le film de substrat (12) est un film revêtu de SiOₓ, en particulier un film de PET revêtu de SiOₓ.

6. Film multicouche selon la revendication 1, **caractérisé en ce que** l'on utilise comme catalyseur du palladium dans une épaisseur de couche de 0,05 à 5 nm, en particulier de 0,05 à 0,5 nm.

7. Procédé pour la préparation d'un film multicouche selon l'une quelconque des revendications 1 à 6, **caractérisé en ce que** l'on applique le catalyseur au moyen d'une pulvérisation cathodique sur le film de substrat (12).

8. Procédé selon la revendication 7, **caractérisé en ce que** l'on applique le catalyseur en ligne avec un revêtement de SiOₓ au moyen d'une ou plusieurs sources de pulvérisation cathodique disposées après le revêtement de SiOₓ.

9. Procédé selon la revendication 7 ou 8, **caractérisé en ce que** plusieurs cathodes de pulvérisation cathodique de la largeur d'une bande de feuille correspondant à la distance, comme elle est utilisée ultérieurement pour un emballage, sont disposées les unes à côté des autres.

10. Procédé selon la revendication 9, **caractérisé en ce que** les cathodes de pulvérisation cathodique sont pulsées de sorte que des taches de palladium sont déposées sur les bandes de feuilles à l'endroit des bandes.

11. Utilisation de la feuille multicouche selon l'une quelconque des revendications 1 à 6 comme feuille d'emballage, feuille de sac ou feuille individuelle partiellement appliquée, en particulier dans la forme d'une étiquette collée dans un domaine de l'emballage avec un contact au matériau à emballer sur le matériau d'emballage ou scellée contre le matériau d'emballage.
